Europäisches Patentamt

European Patent Office

Office européen des brevets

(19)

(11) Publication number: **0 066 938 B1**

(12) **EUROPEAN PATENT SPECIFICATION**

(45) Date of publication of patent specification: **24.04.91**

(51) Int. Cl.⁵: **H01M 10/36, H01M 2/14, H01M 4/64**

(21) Application number: **82301197.8**

(22) Date of filing: **09.03.82**

Divisional application 86200846 filed on 16.05.86.

The file contains technical information submitted after the application was filed and not included in this specification

(54) **Separator-spacer, electrode, and use thereof in electrochemical systems.**

(30) Priority: **01.06.81 US 268665**
**01.06.81 US 268666**
**01.06.81 US 268674**
**01.06.81 US 268675**

(43) Date of publication of application:
**15.12.82 Bulletin 82/50**

(45) Publication of the grant of the patent:
**24.04.91 Bulletin 91/17**

(84) Designated Contracting States:
**AT CH DE FR GB IT LI SE**

(56) References cited:
| | |
|---|---|
| EP-A- 0 022 402 | CH-A- 119 558 |
| DE-A- 1 810 679 | DE-A- 2 627 143 |
| FR-A- 1 504 315 | FR-A- 1 547 710 |
| FR-A- 2 085 028 | FR-A- 2 138 430 |
| FR-A- 2 300 424 | FR-A- 2 347 787 |
| GB-A- 1 160 587 | US-A- 4 124 478 |
| US-A- 4 153 759 | US-A- 4 169 816 |
| US-A- 4 218 521 | |

(73) Proprietor: **EXXON RESEARCH AND ENGINEERING COMPANY**
**P.O.Box 390, 180 Park Avenue**
**Florham Park, New Jersey 07932(US)**

(72) Inventor: **Grimes, Patrick Gerard**
**504 Mountain Avenue**
**Westfield New Jersey(US)**
Inventor: **Einstein, Harry**
**25 Midvale Drive**
**Springfield New Jersey(US)**
Inventor: **Newby, Kenneth Russ**
**77 Sycamore Avenue**
**Berkeley Heights New Jersey(US)**
Inventor: **Bellows, Richard James**
**634 Carleton Road**
**Westfield New Jersey(US)**
Inventor: **Tsien, Hsue Chu**
**11 Oak Hill Road**
**Chatham New Jersey(US)**

Chemical Abstracts, vol. 92, 1980, page 188, ref 131986y, Columbus, Ohio, US; R. Putt:"Assessment of technical feasibility of zinc/bromine batteries for utility load leveling" & Report 1979, EPRI-EM-1059, 256pp

Extended Abstracts, vol. 79-2, Fall-meeting, 14-19th Octobre 1979, abstract no. 112, Los Angeles, California, US; R. Bellows:"Bipolar Zn/Br2 Battery for motive power", pages 285-287

(74) Representative: **Somers, Harold Arnold et al ESSO Engineering (Europe) Ltd. Patents & Licences Mailpoint 72 Esso House Ermyn Way**
**Leatherhead, Surrey KT22 8XE(GB)**

**Description**

FIELD OF THE INVENTION

This invention relates to an electrode for use in electrochemical cells, and more particularly to an electrode for use in an improved cell construction which can be useful in vehicular battery systems.

BACKGROUND OF THE INVENTION

In recent times, the use of light-weight battery materials and cost efficient battery constructions has been of prime interest to the automotive and battery industries. In particular, cost-effective battery designs are of paramount importance for electric vehicular systems. For electric vehicles and other bulk energy storage applications, cost justification of a battery system is highly sensitive to the initial battery cost and to the life-cycle cost. The present invention provides a new electrode for an electrochemical cell construction which reduces the initial costs and extends operating life for a battery system through the utilization of new manufacturing techniques, new weight-reducing materials and new integration of components.

The electrode of the present invention is useful in the manufacture, construction and assembly of many different kinds of electrochemical cells, and the invention should be interpreted as not being limited to a specific system.

It is of particular interest for use in a circulating zinc-bromine battery, constructed in accordance with the teachings advanced in US-A-4105829 (inventor: Agustin F. Venero), entitled: "Metal Halogen Batteries and Method of Operating Same", issued on August 8, 1978, and assigned to the assignee of the present invention.

The above-mentioned battery system is of particular interest because of its low cost and availability of reactants, its high cell voltage and its high degree of reversibility.

DISCUSSION OF THE PRIOR ART

FR-A-2300424 describes and claims a fuel cell of the kind comprising a plurality of bipolar electrodes separated from one another by semi-permeable separators, the bipolar electrodes each comprising a frame made fron an electrically insulating material and enclosing a semi-permeable central portion, one of the faces of the active central portion of each of the bipolar electrodes being supplied with fuel and electrolyte. while the other face is supplied with a gaseous combustion-assisting agent, the bipolar electrodes and separators being clamped against one another so as to form a rigid assembly, and characterized in that the top side and the bottom side of the frame of the electrodes are formed with a plurality of microchannels equally spaced out and parallel with one another, the microchannels of the top side being adapted to irrigate one of the faces of the active central portion of the electrode with fuel and electrolyte, the microchannels of the bottom side evacuating the electrolyte and the products resulting from the reaction. while the side members of the frame of the electrodes each comprise a groove, one of the grooves being adapted to irrigate the other face of the active central portion of the electrode with the gaseous combustion-assisting agent, the other groove evacuating the combustion-assisting agent after reaction on the other face of the active central portion of the electrode. The outer corners of the frames of the electrodes and the separators each comprise a reinforcement having a rounded, outwardly projecting external perimeter. the reinforcements being formed with bores adapted to receive a means for clamping the electrodes and separators together. The active central portion of the electrodes is formed with an embossed motif formed by offset studs.

To the best of our knowledge and belief, the various novelties presented and described herein, are new within the art of electrochemical system design and construction. The skilled practitioner will gain a particular appreciation of the unique ideas and concepts advanced herein.

SUMMARY OF THE INVENTION

In one aspect, the present invention provides an electrode for use in an electrochemical cell (for example a zinc-bromine cell) comprising a central part of electrically-conductive plastics material and side parts of electrically non-conductive plastics material which have been coextruded with the central part, characterized in that the side parts are provided only on two opposite edges of the central part as a result of coextrusion in a side-by-side relationship with the central part and the side parts have substantially the same thickness as the central part and the two edges of the central part extending between the side parts are undercut so that the lengths of the side parts exceed the length of the undercut central part between the two said edges.

In one embodiment the central part has a composition comprising, in parts by weight (pbw), 25pbw carbon; 5pbw pitch fiber; 5pbw glass fiber and 1 pbw silica powder.

The present invention also provides a method of producing an extruded sheet electrode of the type described, characterized by the steps of:

(a) selecting one electrically conductive plastics material and another electrically non-conductive plastics material having similar melt indices; and

(b) coextruding said electrically conductive plastics material and said electrically non-conductive plastics material in a side-by-side orientation with very closely equal viscosities and velocities to form a composite sheet having a substantially sharply defined line of demarcation between the resulting coextruded conductive part and the non-conductive part.

Preferably in coextruding step ( b), the said dissimilar plastics materials have substantially equal extrusion velocities.

The said method may comprise the step of: (c) working at least one of said plastics materials while still hot and soft after extrusion, said working preferably comprising pinching or/and dimpling at least one of the plastics materials.

Preferably, the coextrusion is so performed that the conductive and non-conductive plastics materials are delivered in separate flow channels of an extrusion device having die lip exists and maintained in their respective flow channels until they are caused to join at the die lip exits.

The invention further provides an electrochemical apparatus comprising at least one stack of cells each comprised of two electrodes, each as herein described separated by a suitable separator and spacer unit.

An electrochemical apparatus which may use the electrodes of the present invention is described and claimed in our co-pending European patent application No. 86200847.1 (EP-A-0203657) which has been divided from the present patent application. Our co-pending European patent application No. 86200847 1 (publication No. EP-A-0203659), divided from the present application, describes and claims an electrochemical construction comprising a cell comprising a separator disposed between electrodes, characterized in that the construction comprises at least one stack of cells each comprised of an integral separator and spacer unit disposed between electrodes, each electrode comprising a plastics sheet having a coextruded electrically-conductive mid-portion and electrically non-conductive side portions. Preferably each electrode has side portions on no more than two opposite sides of the unit, and preferably the separator-spacer units and the sheet electrodes are assembled by male and female connections which are preferably hollow and form fluid conduits for said cells. Moreover, the said connections preferably have channels or orifices in their walls for the passage of electrolyte between the interiors of the connections and respective electrolyte spaces or compartments defined between each separator-spacer unit and the adjacent electrode. In the electrochemical construction of EP-A-0203659, the separator-spacer preferably has a microporous mid-portion and non-porous side-portions, and preferably, each separator-spacer unit has projections disposed on each face which separate the adjacent electrodes therefrom so that a space or compartment for electrolyte is maintained between each unit and the adjacent electrodes. Preferably projections on one face of each unit are directly opposite projections on the opposite face of the unit The construction preferably comprises a zinc-bromine system, and may form at least part of a battery electrolyzer or fuel cell.

We make no claim in the present patent application to the electrochemical construction of our co-pending European patent application No. 86200847.1 (publication No. EP-A-0203659), although the said electrochemical construction and some features thereof are described herein to provide a technical perspective for the electrode of the present invention.

A separator and spacer unit for separating pairs of electrodes of the present invention in an electrochemical apparatus is described and claimed in our co-pending European patent application No 86200846.3 (EP-A-0203656) divided from the present patent application. Our co-pending European patent application No. 86200846.3 (publication No. EP-A-0203656), divided from the present application, describes and claims an integral separator and spacer unit for use in an electrochemical cell having electrodes and through which cell, during operation, a circulating electrolyte flows in contact with the electrodes, the said unit being in the form of a sheet disposable between adjacent pairs of electrodes and comprising a frame disposed about a non- perforated microporous web which is thinner than the frame in order to define or form either internal compartments or recesses forming at least part of such internal compartments between the unit and the adjacent electrodes when assembled with the latter so that circulating electrolyte can flow about said electrodes, said web being able to provide ionic communication between adjacent compartments of the cell, characterized in that each face of the web has a plurality of discrete pebble-shaped and/or rod/shaped projections which are ionicaly either less conductive or substantially non-conductive for maintaining a spaced compartmental distance between said unit and adjacent electrodes, substantially all of said projections on one face of the web being directly opposite corresponding projections on the other face thereof, the web being preferably ionselective. Preferably, the frame comprises a non-porous border substantially surrounding the microporous web, and preferably, the frame has a connector which is cooperable with a connector of an adjacent frame, when the electrochemical cell is assembled, for the passage of electrolyte through the assembled electrochemical cell, and a channel from one connector into a compartment and via the channel into another connector. Preferably, each connector is of the male-female type, the male part being adapted to be received in the female part of a connector of another unit on one side and the female part being adapted to receive the male part of a connector of a further unit on the opposite side. The frame may be overmolded around the edges of the web, and at least some of the projections may have non-ionically conductive caps thereon or thereto, which may be diamond or rhombus shaped. The projections are preferably of a different material from the material of the web, and may be non-porous.

We make no claim in the present patent application to the integral separator and spacer unit of our copending European patent application No. 8620846.3 (publication No. EP-A-020356), although the said unit and some features thereof are described herein to provide a technical perspective for the electrode of the present invention.

Preferably, the said non-conductive material comprises one or more olefin homo- and/or copolymers, and the conductive material may comprise a carbon plastics material. The central part and the side parts may each be olefin polymer or copolymer.

Preferably, the side parts have holes to receive male elements of hollow connectors of separators which, in the assembled electrochemical cell, are disposed on each side of the electrode.

The said central part of the electrode may be hot-formed, and optionally, dimpled. Moreover, the central part may have been sprayed with activated carbon.

The electrodes have narrow non-conductive top and bottom side portion strips with respect to their larger conductive mid-portions. The electrodes can be made monopolar or bipolar, but can be specifically bipolar in order to operate in a zinc-bromine system, for example. The non-conductive side strips can be made of polypropylene, polyethylene, or copolymers thereof, while the conductive mid-portion comprises a carbon-containing polyolefin. More specifically, the conductive mid-portion comprises by weight 100 parts polyolefin, 25 parts carbon, 5 parts each pitch fiber and glass fiber and 1 part fumed silica powder. The extruded material can be hot formed and can be dimpled.

The electrochemical construction in which the electrodes of the invention may be used can be provided with a protective current in order to reduce or eliminate parasitic shunt currents in common electrolyte systems of this type. The said electrochemical construction may be a zinc-bromine electrochemical system which may include a leak and impact resistant constructions comprising:

a first inner compartment for storing a bromine-rich phase;

a second compartment substantially surrounding said first inner compartment and containing a first electrolyte for circulation through said cell;

a third compartment substantially surrounding both said second and first compartments and containing a second electrolyte for circulation through said cell; and

an outer casing substantially surrounding said first, second and third compartments.

The first electrolyte is generally the catholyte for the system, while the second electrolyte is generally the anolyte. The bromine-rich phase is a non-aqueous phase which separates from the aqueous catholyte and contains bromine complexing agents.

The compartment and casing materials are generally comprised of chemically inert, impact resistant plastics.

It is an object of the present invention to provide a cost-efficient electrode suitable for use in an electrochemical cell (e.g. of the said zinc-bromine type).

## BRIEF DESCRIPTION OF THE DRAWINGS

The invention is now further described with reference to embodiments thereof and with reference to the accompanying drawings, in which:-

Figure 1 is a schematic diagram of a typical circulating zinc-bromine electrochemical system using the electrode of the present invention;

Figure 2 is a partially cutaway perspective view of an embodiment of a zinc-bromine system employing the electrode of the invention;

Figure 3 is an exploded perspective view of the two-sheet stack construction of a portion of a stack of cells of an electrochemical system embodying and showing the electrode of this invention;

Figure 4 is a front view of a coextruded sheet electrode of the present invention shown in Figure 3;

Figure 4a is a side view of the sheet electrode of Figure 4;

Figure 5 is a perspective view of the electrode being extruded;

Figures 5a, 5b and 5c are respectively the top, front and side views of the coextrusion die used to fabricate the sheet electrode shown in Figures 3, 4 and 4a;

Figure 6 is a front view of an integral separator-spacer illustrated in the construction of Figure 3 and which is described and claimed in EP-A-0203656. The said separator-spacer forms no part of the present invention.

Figure 6a is a side view of the integral separator-spacer depicted in Figure 6;

Figures 7a through 7d are illustrative of various designs for the projections depicted on the web surfaces of the separator-spacer shown in Figures 6 and 6a; and

Figures 7aa through 7dd are side views of the projections depicted in respective Figures 7a through 7d.

## DETAILED DESCRIPTION OF THE INVENTION

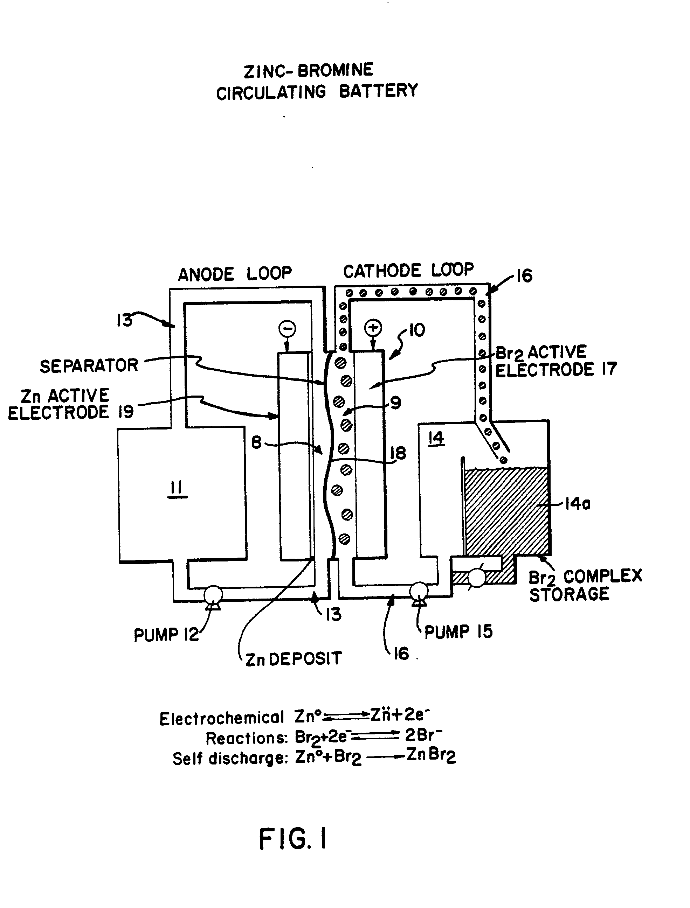

Referring to Figure 1, a schematic diagram of a typical circulating, bipolar zinc-bromine system is shown. The zinc-bromine system of Figure 1 comprises two electrolytes which are circulated through separate compartments 8, 9 respectively, of the cell 10. An anolyte which is generally stored in reservoir 11 is pumped via pump 12 through compartment 8 and loop 13, generally referred to as the anode loop. A catholyte which is generally stored in reservoir 14, is pumped via pump 15 through compartment 9 and loop 16, generally referred to as the cathode loop.

The zinc-bromine system is also a two phase system, in that the catholyte has bromine complexing agents and is comprised of a first aqueous phase and a second, non-aqueous, bromine-rich phase. The bromine-rich (complexed) phase tends to separate at the bromine active electrode 17 from the aqueous catholyte. This non-aqueous phase is stored in the reservoir 14, as illustrated schematically by shaded portion 14a.

A separator 18 delinates and defines the boundary between the anolyte and cathode compartments 8 and 9, respectively. The separator 18 is a membrane which prevents or binders movement of anions such as the bromide and tribromide ions from cathode compartment 9 to the anode compartment 8. In a bipolar design, the zinc active electrode 19 and the bromine active electrode 17 are opposite sides of the same electrode structure.

Further description of the zinc-bromine system can be obtained with reference to aforementioned US-A-4,105,829; issued August 8, 1978.

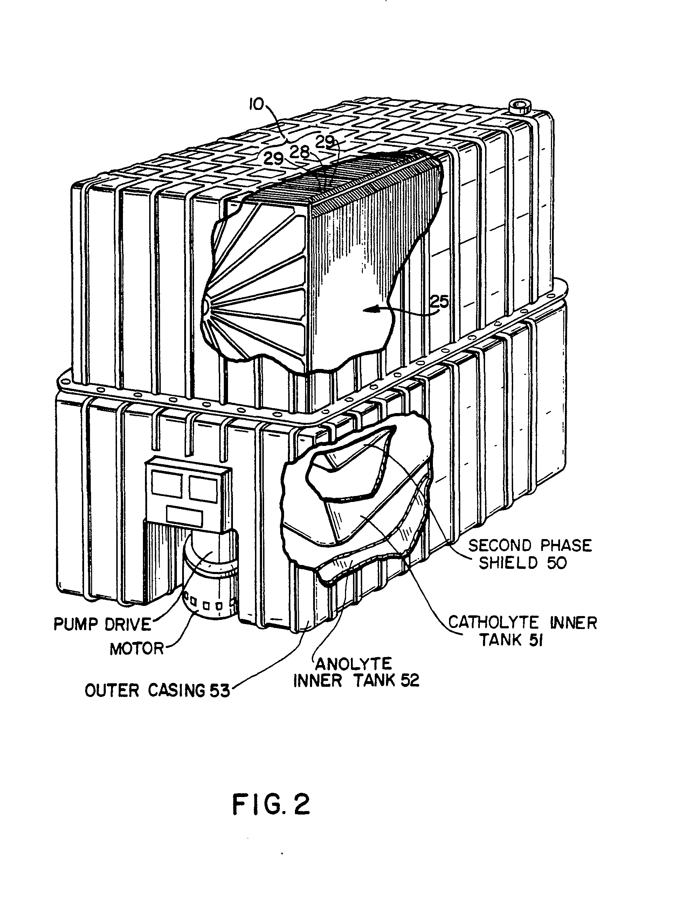

The zinc-bromine system can be made more practicable by integrating and improving various components of Figure 1, as will be hereinafter explained with respect to the construction shown in Figures 2 through 7. Where applicable within the description, like components may have similar numerical designations for the sake of brevity.

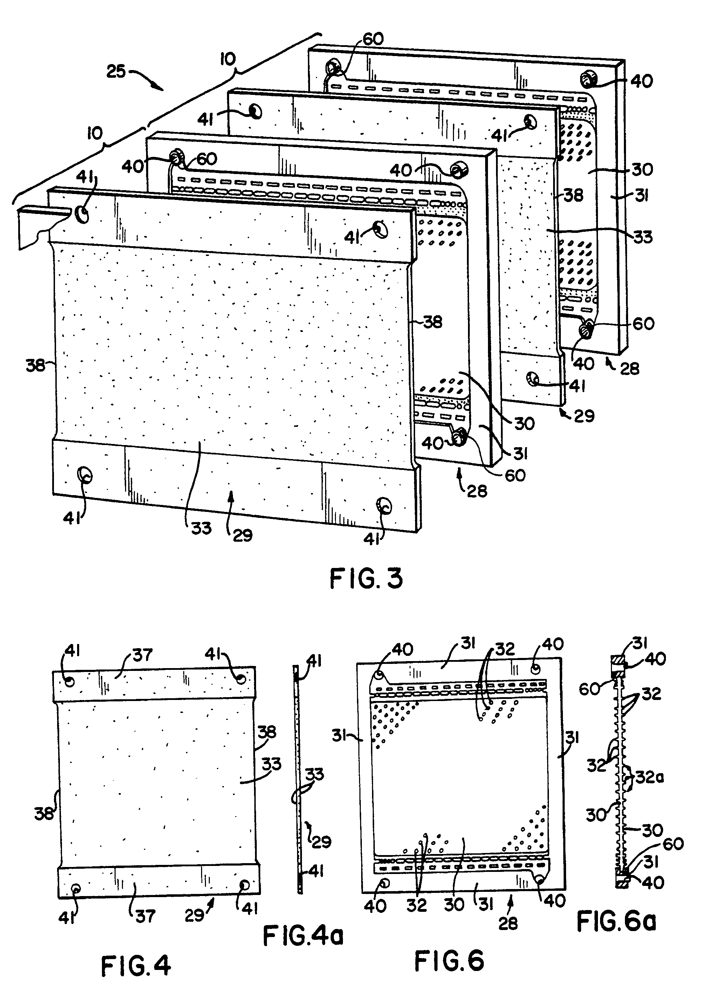

Now referring to Figure 2, an improved electrochemical system is shown in a schematic perspective view. The improved system utilizes an integrated two-leaved separator-spacer (as described and claimed in EP-A-0203656) and an electrode according to the invention forming the portion of a stack of cells, as depicted in the exploded view of Figure 3.

The electrochemical system of Figure 2, comprises a battery stack 25 which in turn is comprised of a plurality of cells 10, each having two plates, as shown in Figure 3. One plate is an integral separator-spacer 28 (according to EP-A-0203656 and the other plate is an electrode sheet 29 according to the invention. The separator-spacer has two functions combined in a single sheet. The first purpose is that of the separator 18 in Figure 1, i.e. to provide fluid communication between compartments as a membrane. A more detailed description of this function can be obtained from the above-mentioned US-A-4,105,829; issued August 8, 1978; and also from US-A-4,259,417; issued March 31, 1981 for an "Ionic Barrier", to inventors: R. J. Bellows and P. G. Grimes.

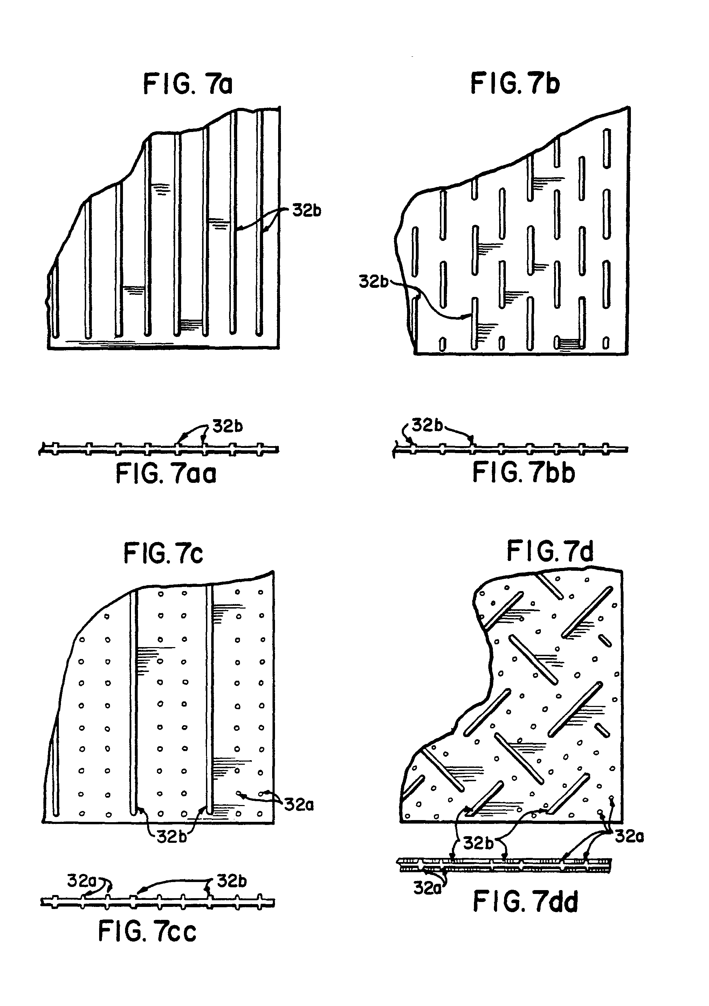

The second function of sheet 28 is to space the sheet 28 from the adjacent electrode sheets 29 so as to create respective anolyte and catholyte compartments 8 and 9 (Figure 1). The separator-spacer sheet 28 has a microporous mid-portion surface 30 which is recessed from the non-porous surface 31 of the sides, as shown in more detail in Figures 6 and 6a. When the separator-spacer sheets 28 are pressed between electrode sheets 29, the stack structure 25 is formed, as shown in Figure 2. The projections 32 on the microporous mid-portion surfaces are designed to maintain a spaced compartmental distance between the separator-spacer surface 30 and the flat conductive surfaces 33 of adjacent electrode sheet 29. The projections 32 provide structural means against collapse of surfaces 33 upon surfaces 30 and vice versa. The projections 32 on one side 30 of sheet 28 are diametrically opposite corresponding projections 32 on the opposite side 30 of sheet 28 as clearly illustrated in Figure 6a. This is done, to provide a greater strength against distortion of surfaces 33 upon surfaces 30. The projections 32 usually are designed as pebbles as depicted by arrows 32a in Figure 6a, and as also shown in Figures 7cc and 7dd, etc.

These projections 32 may also be designed with a rod-shape as depicted in Figures 7a, 7aa and 7b, 7bb; by arrows 32b. The projections 32 may also be a combination of pebble and rod-shaped protuberances as depicted in Figures 7c, 7cc and 7d, 7dd.

The design of these projections allow for an expeditious flow of electrolyte through the compartments 8 and 9, respectively. The flow of electrolyte is accomplished without entrapping gas bubbles about projections 32 within the compartmental cavities 8 and 9.

The mid-portion of the separator-spacer sheet 28 can be comprised of a microporous membrane material known as Daramic[R], Series HW-0835, which is made by W. R. Grace Co., Polyfibron Division, Cambridge, Massachusetts. The raised side borders 31 of non-porous material may be any moldable plastic. The plastics material of borders 31 is typically overmolded around the separator-spacer insert by injection molding, as can be seen from Figure 6a.

The separator sheets 28 and electrode sheets 29 are assembled by means of hollow male/female connectors 40 shown in detail in Figures 6 and 6a. When the sheets 28 and 29 are assembled in a stack 25, these hollow connectors 40 form electrolyte manifolds which supply compartments 8 and 9 with electrolyte via individual conduits or channels 60.

The male/female connectors 40 of sheets 28 fit through the holes 41 (Figures 4 and 4a) in adjacent sheets 29, and snap into mating connectors 40 in subsequently adjacent sheets 28.

The electrode sheet 29 of Figures 4 and 4a is comprised of a coextruded sheet of plastics material which has an electrically conductive mid-portion 33 and two side portions 37 of electrically non-conductive (insulating) plastic. The top and bottom side portions 37 are co-extruded "side-by-side" along with the mid-portion 33 to form a one piece continuous electrode sheet, which continuous sheet is then cut to specific lengths to form a plurality of smaller sheets 29. The edges 38 of sheet 29 are undercut to improve electrical isolation in stack 25.

This "side-by-side" profile co-extrusion of insulating and conductive plastics sheets 37 and 33, respectively, presents a new and an alternative fast method of production for all monopolar and bipolar electrodes including electrodes for zinc bromine batteries. Compared with compression molding, the co-extrusion method gives more uniformity in thickness, a stronger bonding between the insulating and conductive plastics materials, much desired flatness and "electrode by yards" similar to dress fabrics. The fabrication cost is much lower because the process is continuous.

A special formulation of carbon plastics material is needed for mid-portion 33 of sheet 29 to provide good electrical conductivity, but which still exhibits good extrudibility, good strength, and excellent anticorrosive properties against bromine and zinc bromide in the electrolyte.

The preferred composition of the conductive carbon plastic is covered by aforementioned US-A-4,169,816; issued October 2, 1979, to H.C. Tsien. This formulation gives good conductivity (1 to 2 ohm-cm in resistivity) , good flex strength, low permeability inertness to bromine, good extrudibility, better weldability and less mold shrinkage.

The conductive plastics material is a mixture of 100 parts by weight of polyolefin copolymer, 25 parts by weight of special conductive carbon, 5 parts by weight each of carbon fiber and glass fiber, and 1 part by weight of fumed silica powder.

Some of the other advantages of coextruding the sections 33 and 37 are:

1. Good bonding between the insulating and conductive plastics materials.

2. Maintaining width, flatness and thickness dimensions with the tolerances specified.

3. Clear and sharp boundary lines between the sections 33 and 37.

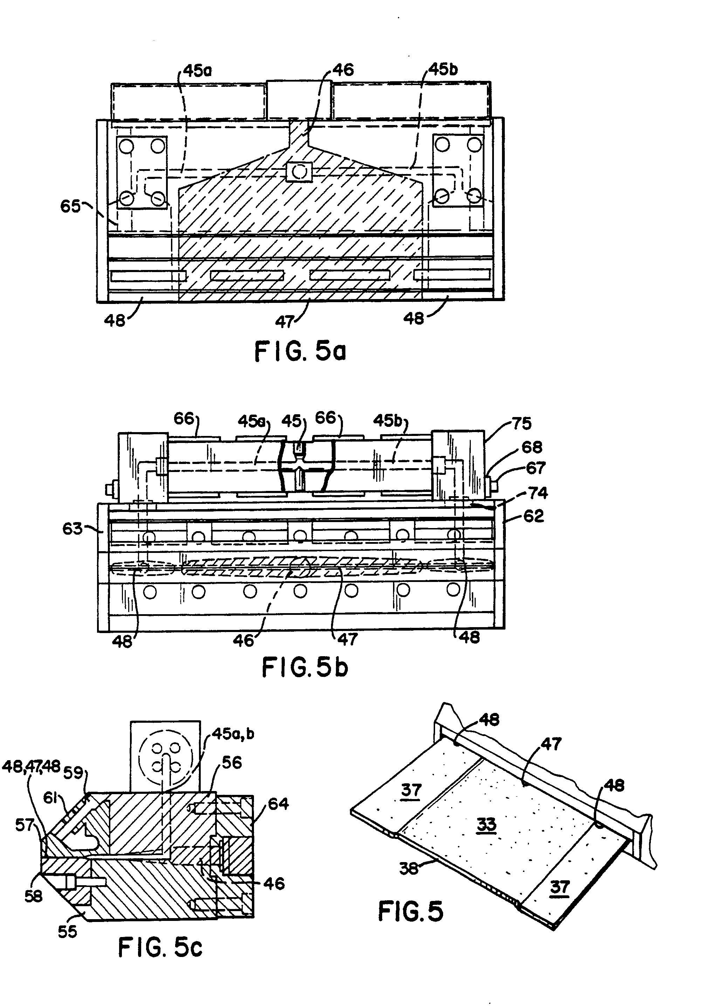

Figures 5a, 5b and 5c are respective top, front and side views of an extrusion die used to fabricate the electrode sheet. The center extrusion die 47 receives conductive plastics material from a horizontal extruder through conduit 46, while the side extrusion dies 48, each receive non-conducting plastics material from an overhead, vertical extruder via conduits 45a and 45b, respectively.

The horizontal extruder for the black conductive plastic is a 2-1/2"(6.35cm) screw with L/D of 30:1, while the vertical extruder for the opaque insulating plastic is a 1-1/2"(3.81cm) dia. screw with L/D of 24:1.

The melted insulating plastics material enters into the die at 90 degrees from the vertical stream 45, divides into two streams 45a and 45b and flows into one left and one right separate "coat hangers" along side the main "coat hanger" 45. The die design is conventional, except that the side-by-side profile division is believed to be novel. The die is of split construction in order to facilitate any changes in the design and the ease of fabrication.

The main die assembly consists of a lower die body 55, upper die body 56, flexible upper lip 57 and fixed lower lip 58.

The die lip gap is ground to allow for the swell of plastics emerging out of the die. Lip gaps can be individually adjusted by screws 59 in conjunction with the nut bars 61. The two side members 62 and 63 close the two outsides of flow channels of the insulating plastics materials and give a box-like reinforcement.

Adapter 64 provides connection to the main extruder. There are (16) cartridge heaters 65 and (4) band heaters 66 for heating the two streams of plastics materials. Temperatures are controlled through the thermocouples and individual zone temperature controllers.

The individual adjustment of the left and right streams 45a and 45b is made possible by ball headed adjusting screws 67 and locknut 68. Bushings 74 make good connection from valve blocks 75 to die block 56. All main parts of the die are made of A2 air-hardened tool steel. The Bethelehem A2 air-hardening steel has the following physical properties:

|  | As-annealed | | Heat Treated | |
|---|---|---|---|---|
| Hardness (R/C) | 15-20 | | 56-58 | |
| Yield Strength (psi) Pa | (55,000) | 379.2 | (208,750) | 1439.3 |
| U.T.S. (psi) Pa | (114,950) | 792.6 | (255,250) | 1759.9 |
| Elongation % | 18% | | .8% | |

With the head pressures from the extruders well over 1000 psi(6.895 Pa), the die cannot operate free from internal leakage between the insulating and conducting streams if the die is in the soft annealed condition. The hardened and reground die eliminates internal leakage. Four different types of insulating plastics materials were tried, they are:

| | Melt Flow Index |
|---|---|
| Fiberfil J60/20E | 230°C, 2160 g. load, 4.5 g in 10 min. |
| UGI LR711 HDPE | 190°C, 2160 g load, 10.5 g in 10 min. |
| Exxon P.P. 5052 P.P. | 230°C, 2160 g load, .9 to 1.5 g in 10 min. |
| Exxon P.P. 5011 P.P. | 230°C, 2160 g load, .45 to .85 g in 10 min. |

Both Exxon homopolymer PP5011 and 5052 can match well with the conductive plastics. They came out of the die with no wrinkles, the sheets were flat and uniform.

Theoretically, aside from previous considerations, any polyethylene or polypropylene for side portions 37 can be a good match with the conductive plastic mid-portion 33, because the basic material used in the conductive plastics is the copolymer of the two. The melting points are in the range of 325 to 375°F(162.7 to 190.6°C). Therefore, approximately 400°F(204.4°C) is a proper temperature in range for the two streams to meet. Head pressures are 1500 to 1800 psi(10.3 to 12.4 Pa). These conditions made a good bond at the bonding line.

Close match of melt indices is necessary in order to eliminate scallops formed at the joint of the two edges. The viscosities and velocities of the streams from the two extruders need to be very closely equal. Pressures can be manipulated from two heads while varying the temperatures in various die zones to get the matching conditions. However, the differences between melt flow indices of conductive and insulating plastics have to be minimized.

The extrusion speed can be around 20 ft.(6.1m)/minute to 90 ft.(27.4m)/minute.

There are many downstream attachments that can be added so that the co-extruded sheet can be worked on while still hot and soft. Thus, the repeated heating and cooling cycles with the accompanied plastics degradations can be eliminated. Powder of activated carbon can be sprayed on one face of the carbon plastics as the sheet is emerging from the die and before the sheet is pinched by the cold nip rolls. The powder spray is limited in the conductive area.

Various types of surface finishes can be obtained by changing the nip rolls from polished chrome-plated surface to Teflon ™ coated and rubber rolls. It is also possible to replace nip rolls with dimpling rolls, so that cavities or special flow patterns can be formed on one or both faces of the co-extruded sheet. The hot forming rolls can make repeated patterns of design indentations in the electrode, if so desired.

The combination possibilities are only limited by imagination. For dimpling, the design is also repeated every revolution of the dimpling rolls. It is very much like printing repeated patterns on textile fabric. These downstream modifications such as catalyst spraying, dimpling, or hot forming can be added so that all operations can be done without significant added production cost.

Figure 5 is a schematic perspective view of the continuous electrode sheet emerging from the split die illustrated in Figures 5a, 5b and 5c.

Now referring to Figure 2 and for the sake of completeness of explanation, a further safety feature for the electrochemical system of EP-A-0203659 is illustrated. In order to prevent or reduce the risk of spilling corrosive bromine and bromine compounds in the event of casing or compartmental rupture, the various compartments can be nested with the bromine-containing compartment 50 being the most internal compartment. The bromine compartment 50 is surrounded by the catholyte-containing compartment 51, which in turn is surrounded by the anolyte-containing compartment 52. Compartments 50, 51, and 52 are all enclosed by outer casing 53.

Shunt currents can be eliminated along formed manifolds (connectors 40) by applying a protective current along these electrolyte carrying conduits, in accordance with the teachings expressed in aforementioned US-A-4,197,169 issued April 8, 1980 to M. Zahn, P. G. Grimes and R. J. Bellows.

The two-leaved electrochemical cell construction reduces parts and is easier to fabricate and assemble than prior systems of this kind. Further modifications to the electrode of the invention within the scope of the appended claims, may occur to those skilled practitioners of this art. Such modifications have not been described for the sake of brevity.

Other preferred features of the electrode of the invention, which features may be taken individually or in combination, are:-

(a) The extruded sheet electrode is a monopolar or bipolar electrode.

(b) Said sheet electrode has said non-conductive material as one or more olefin homo- and/or copolymers, such as PE, PP, or EP copolymer.

(C) The conductive material is preferably a synthetic plastics material and, suitably, is inert to bromine and compounds thereof.

(d) The sheet electrode is hot-formed and, desirably, dimpled.

## Claims

1. An electrode for use in an electrochemical cell (for example a zinc-bromine cell) comprising a central part (33) of electrically-conductive plastics material and side parts (37) of electrically non-conductive plastics material which have been coextruded with the central part (33), characterized in that the side parts (37) are provided only on two opposite edges of the central part (33) as a result of coextrusion in a side-by-side relationship with the central part (33), and the side parts (37) have substantially the same thickness as the central part (33) and the two edges (38) of the central part (33) extending between the side parts (37) are undercut so that the lengths of the side parts exceed the length of the undercut central part between the two said edges.

2. An electrode as in claim 1 in which the said non-conductive material comprises one or more olefin homo- and/or copolymers.

3. An electrode as in claim 1 or claim 2 in which the conductive material comprises a carbon plastics material.

9

4. An electrode as in any one of claims 1 to 3 in which the central part and the side parts are each olefin polymer or copolymer.

5. An electrode as in any one of claims 1 to 4 in which the side parts (37) have holes (41) to receive male elements of hollow connectors (40) of separators (28) which, in the assembled electrochemical cell, are disposed on each side of the electrode.

6. An electrode as in any one of claims 1 to 5 in which the central part (33) is hot-formed, and optionally, dimpled.

7. An electrode as in any one of claims 1 to 6 in which the central part (33) has been sprayed with activated carbon.

8. An electrode as in any one of claims 1 to 7 in which the central part (33) has a composition comprising, in parts by weight (pbw), 25pbw carbon; 5pbw pitch fiber; 5pbw glass fiber and 1 pbw silica powder.

9. A method of producing an extruded sheet electrode in accordance with any one of claims 1 to 8 characterized by the steps of:
   (a) selecting one electrically-conductive plastics material and another electrically non-conductive plastics material having similar melt indices; and
   (b) coextruding said one plastics material and said other plastics material in a side-by-side orientation with very closely equal viscositites and velocities to form a composite sheet having a substantially sharply defined line of demarcation between the resulting coextruded parts.

10. A method as in claim 9 in which in coextruding step (b), the said dissimilar plastics materials have substantially equal extrusion velocities.

11. A method as in claim 9 or claim 10 comprising the step of: (c) working at least one of said plastics materials while still hot and soft after coextrusion, said working preferably comprising pinching or/and dimpling at least one of the plastics materials.

12. A method as in any one of claims 9 to 11 in which the said one and the said other plastics materials are delivered in separate flow channels (45, 45a, 45b, 46) of an extrusion device having die lip exits (47, 48) and maintained in their respective flow channels until they are caused to join at the die lip exits (47, 48).

**Revendications**

1. Electrode destinée à être utilisée dans une cellule électrochimique (par exemple une cellule zincbrome) comprenant une partie centrale (33) réalisée en un matériau en plastique électriquement conducteur et des parties latérales (37) réalisées en un matériau en plastique électriquement non conducteur, ces parties latérales ayant été co-extrudées avec la partie centrale (33), caractérisée en ce que les parties latérales (37) sont prévues sur seulement deux bords opposés de la partie centrale (33) du fait qu'elles résultent de la co-extrusion en juxtaposition avec la partie centrale (33), en ce que les parties latérales (37) ont sensiblement la même épaisseur que la partie centrale (33), et en ce que les deux bords (38) de la partie centrale (33) qui s'étendent entre les parties latérales (37) sont entaillées de telle sorte que les longueurs des parties latérales soient plus grandes que la longueur de la partie centrale qui a été entaillée entre les deux bords.

2. Electrode selon la revendication 1, dans laquelle le matériau non conducteur comprend un ou plusieurs homopolymères et/ou copolymères d'oléfine.

3. Electrode selon la revendication 1 ou 2, dans laquelle le matériau conducteur comprend un matériau en plastique à base de carbone.

4. Electrode selon l'une quelconque des revendications 1 à 3, dans laquelle la partie centrale et les parties latérales sont chacune réalisées en polymère d'oléfine ou en copolymère d'oléfine.

**5.** Electrode selon l'une quelconque des revendications 1 à 4, dans laquelle les parties latérales (37) comportent des trous (41) pour recevoir des éléments mâles de connecteurs évidés (40) de séparateurs (28) qui, dans la cellule électrochimique une fois assemblée, sont placés de chaque côté de l'électrode.

**6.** Electrode selon l'une quelconque des revendications 1 à 5, dans laquelle la partie centrale (33) est formée à chaud, et est optionnellement bosselée.

**7.** Electrode selon l'une quelconque des revendications 1 à 6, dans laquelle la partie centrale (33) a été recouverte par pulvérisation avec du charbon actif.

**8.** Electrode selon l'une quelconque des revendications 1 à 7, dans laquelle la partie centrale (33) a une composition qui comprend en pourcentage du poids, 25 % de carbone ; 5 % de fibre à base de carbone ; 5 % de fibre de verre et 1 % de poudre de silice.

**9.** Procédé pour fabriquer une électrode extrudée en forme de plaque selon l'une quelconque des revendications 1 à 8, caractérisé par les étapes de :
(a) choix d'un matériau en plastique électriquement conducteur et d'un autre matériau en plastique non conducteur ayant des indices de fluidité similaires ; et
(b) co-extrusion du dit un des matériaux en plastique et de l'autre matériau en plastique selon une orientation de juxtaposition avec des viscosités et des vitesses pratiquement égales de manière à former une plaque composite qui présente une ligne de délimitation sensiblement effilée entre les parties co-extrudées obtenues.

**10.** Procédé selon la revendication 9, dans lequel l'étape de co-extrusion (b) et les matériaux en plastiques dissemblables ont des vitesses d'extrusion sensiblement égales.

**11.** Procédé selon la revendication 9 ou 10 comprenant l'étape de :
(c) façonage d'au moins un des matériaux en plastique alors qu'il est encore chaud et mou après a co-extrusion, ce façonnage comprenant de préférence un pinçage ou/et un bosselage d'au moins ur des matériaux en plastique.

**12.** Procédé selon l'une quelconque des revendications 9 à 11, dans lequel l'un et l'autre des matériaux er plastique sont acheminés dans des canaux d'écoulement distincts (45, 45a, 45b, 46) d'un dispos·' d'extrusion comportant des sorties de matrice à lèvres (47, 48) et sont maintenus dans leurs canau» d'écoulement respectifs jusqu'à ce qu'ils soient contraints de se rejoindre au niveau des sorties de matrice à lèvres (47, 48).

## Ansprüche

**1.** Elektrode für die Verwendung in einer elektrochemischen Zelle (z.B. einer Zink-Brom-Zelle), mit e·ne⁻ Mittelteil (33) aus elektrisch leitendem Kunststoffmaterial und mit dem Mittelteil (33) coextrudiert·e⁻ Seitenteilen (37) aus elektrisch nicht-leitendem Kunststoffmaterial, dadurch gekennzeichnet, daß 3· Seitenteile (37) nur an zwei entgegengesetzten Rändern des Mittelteiles (33) als Resultat e·ne· Coextrusion in Nebeneinanderanordnung mit dem Mittelteil (33) vorgesehen sind, und daß die Seitente·· le (37) im wesentlichen dieselbe Dicke wie der Mittelteil (33) besitzen und die beiden sich zwischer den Seitenteilen (37) erstreckenden Ränder (38) des Mittelteils (33) hinterschnitten sind, sodaß 3 € Längen der Seitenteile die Länge des hinterschnittenen Mittelteils zwischen den genannten be·der Rändern übersteigen.

**2.** Elektrode nach Anspruch 1, bei welcher das genannte nicht-leitende Material ein oder mehrere Olefinhomo- und/oder -copolymere enthält.

**3.** Elektrode nach Anspruch 1 oder 2, bei welcher das leitende Material ein kohlenstoffhaltiges Kunststoffmaterial enthält.

**4.** Elektrode nach irgendeinem der Ansprüche 1 bis 3, bei welcher der Mittelteil und die Seitenteile jewe·s

aus Olefinpolymer oder -copolymer bestehen.

5. Elektrode nach irgendeinem der Ansprüche 1 bis 4, bei welcher die Seitenteile (37) Löcher (41) besitzen, um männliche Elemente von hohlen Verbindern (40) von Separatoren (28) aufzunehmen, welche Separatoren in der zusammengebauten elektrochemischen Zelle auf jeder Seite der Elektrode angeordnet sind.

6. Elektrode nach irgendeinem der Ansprüche 1 bis 5, bei welcher der Mittelteil (33) warmgeformt und gegebenenfalls mit Vertiefungen versehen ist.

7. Elektrode nach irgendeinem der Ansprüche 1 bis 6, bei welcher der Mittelteil (33) mit Aktivkohle besprüht ist.

8. Elektrode nach irgendeinem der Ansprüche 1 bis 7, bei welcher der Mittelteil (33) eine Zusammensetzung besitzt, die - in Gewichtsteilen (Gew.-T.) ausgedrückt - enthält: 25 Gew.-T. Kohlenstoff, 5 Gew.-T. Pechfaser, 5 Gew.-T. Glasfaser und 1 Gew.-T. Silikapulver.

9. Verfahren zur Herstellung einer extrudierten Plattenelektrode nach irgendeinem der Ansprüche 1 bis 8, gekennzeichnet durch die Schritte:
   (a) Auswählen eines elektrisch leitenden Kunststoffmaterials und eines anderen elektrischen nichtleitenden Kunststoffmaterials mit ähnlichen Schmelzindices, und
   (b) Coextrudieren des genannten einen Kunststoffmaterials und des genannten anderen Kunststoffmaterials in Nebeneinanderanordnung mit nahezu gleichen Viskositäten und Geschwindigkeiten, um eine Verbundplatte mit einer besonders deutlich ausgeprägten Grenzlinie zwischen den resultierenden coextrudierten Teilen zu bilden.

10. Verfahren nach Anspruch 9, bei welchem im Schritt (b) des Coextrudierens die genannten verschiedenen Kunststoffmaterialien im wesentlichen gleiche Extrusionsgeschwindigkeiten haben.

11. Verfahren nach Anspruch 9 oder 10, umfassend den Schritt:
   (c) Bearbeiten mindestens eines der genannten Kunststoffmaterialien, während es nach der Coextrusion noch heiß und weich ist, wobei das Bearbeiten vorzugsweise ein Quetschen und/oder Eintiefen mindestens eines der Kunststoffmaterialien umfaßt.

12. Verfahren nach irgendeinem der Ansprüche 9 bis 11, bei welchem das genannte eine und das genannte andere Kunststoffmaterial in getrennten Strömungskanälen (45,45a,45b,46) eines Düsenaustrittsöffnungen (47,48) aufweisenden Extruders zugeführt und in ihren betreffenden Strömungskanälen gehalten werden,bis sie an den Düsenaustrittsöffnungen (47,48) miteinander in Verbindung gebracht werden.

## ZINC-BROMINE CIRCULATING BATTERY

Electrochemical $Zn^o \rightleftharpoons Z\ddot{n} + 2e^-$
Reactions: $Br_2 + 2e^- \rightleftharpoons 2Br^-$
Self discharge: $Zn^o + Br_2 \longrightarrow ZnBr_2$

# FIG. 1

10
29 28 29
25

SECOND PHASE
SHIELD 50

CATHOLYTE INNER
TANK 51

PUMP DRIVE
MOTOR

ANOLYTE
INNER TANK 52

OUTER CASING 53

FIG. 2

FIG. 3

FIG. 4

FIG.4a

FIG.6

FIG.6a

FIG. 5a

FIG.5b

FIG. 5c

FIG.5

FIG. 7a

32b

FIG. 7b

32b

32b

FIG. 7aa

32b

FIG. 7bb

FIG. 7c

32a

32b

32a

FIG. 7cc

FIG. 7d

32b

32a

32a

FIG. 7dd